# EUROPEAN PATENT APPLICATION

(11) **EP 4 510 692 A1**
(43) Date of publication of application: **19.02.2025**
(21) Application number: 22936765.1
(22) Date of filing: 11.04.2022
(51) Int. Cl.: H04W 28/02, H04W 40/24

(54) **INFORMATION CONFIGURATION METHOD AND APPARATUS, AND COMMUNICATION SYSTEM**

(71) Applicant: FUJITSU LIMITED, Kawasaki-shi, Kanagawa 211-8588 (JP)
(72) Inventor: YI, Su, Beijing 100022 (CN); LI, Guorong, Beijing 100022 (CN); WANG, Xin, Beijing 100022 (CN)
(74) Representative: Haseltine Lake Kempner LLP
(86) International application number: PCT/CN2022/086104
(87) International publication number: WO 2023/197105

(57) **Abstract**

Embodiments of the present disclosure provide a method for configuring information and an apparatus therefor, and a communication system, the apparatus for configuring information is applicable to an IAB-node, the apparatus including a first processing unit, the first processing unit being configured to: match a topology in a backhaul routing configuration indicated by a first type indicator with a topology to which a protocol data unit (PDU) of BAP data belongs.

## Description

### TECHNICAL FIELD

Embodiments of the present disclosure relate to the field of communication technologies.

### BACKGROUND

Integrated access and backhaul (IAB), also called access and backhaul integration, implements a radio relay function in a next generation radio access network (NG-RAN). An integrated access and backhaul node (IAB-node) supports access and backhaul via New Radio (NR). Terminating point of NR backhaul in a network side is called an IAB-donor, which represents a network device (for example, a gNB) having a function of supporting IAB.

An IAB-node may be connected to an IAB-donor via one or more hops. These multi-hop connections form a Directed Acyclic Graph (DAG) topological structure which takes the IAB-donor as a root node. The IAB-donor is responsible for performing centralized resource management, topology management and routing management in an IAB network topology.

The IAB-node supports a function of a gNB-DU (distributed unit), the IAB-node DU is also called an IAB-DU, and the IAB-DU is an endpoint of a radio access (NR) interface to a terminal equipment (UE) and a next-hop IAB-node and is also an endpoint of an F1 protocol to a gNB-CU (central unit) on the IAB-donor. The IAB-DU may serve for a common UEs and a child IAB-node. The IAB-DU implements a function of a network side device, is connected to a downstream child IAB-node, provides NR air interface access for a UE and the downstream child IAB-node, and establishes F1 connection to the IAB donor-CU.

In addition to the function of the gNB-DU, the IAB-node also supports some functions of an UE, called an IAB-MT (Mobile Termination), the IAB-MT includes, for example, functions of a physical layer, a layer 2, RRC and NAS to be connected to a gNB-DU of another IAB-node or IAB-donor, and to be connected to a gNB-CU on the IAB-donor and to a core network. The IAB-MT supports such functions as a UE physical layer, access stratum (AS), a radio resource control (RRC) layer and a non-access stratum (NAS), and may be connected to a parent IAB-node.

The IAB-donor is a terminating node on a network side, and the IAB-donor provides network access for an IAB-MT or a UE via a backhaul or access link. The IAB-donor is further divided into an IAB-donor-CU (central unit) and an IAB-donor-DU. The IAB-DU and the IAB-donor-CU are connected via an F1 interface. In an independent networking scenario, the gNB is connected to the IAB-donor-CU via an Xn interface.

To support multi-hop routing forwarding of a data packet, a Backhaul Adaptation Protocol (BAP) sublayer is introduced to the IAB. The BAP sublayer is located above a radio link control (RLC) sublayer and below an IP layer, and supports such functions as packet destination node and path selection, packet routing forwarding, bearer mapping, flow control feedback, and backhaul link failure notification.

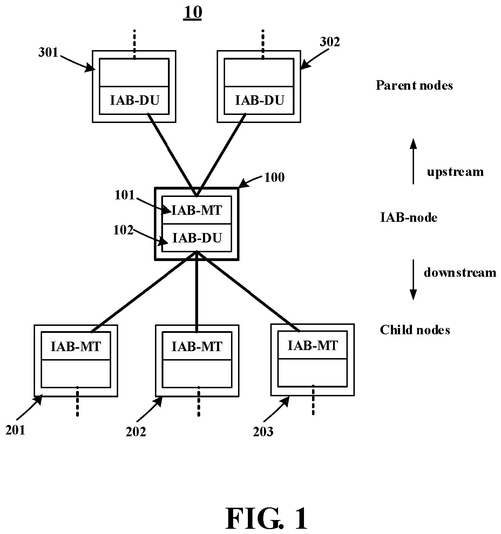

FIG. 1 is a schematic diagram of an IAB parent-child node relationship. As shown in FIG. 1, in an IAB parent-child node relationship structure 10, an IAB-node 100 includes an IAB-MT functional unit 101 and an IAB-DU functional unit 102, neighboring nodes connected to an interface of the IAB-DU functional unit 102 are called child nodes, such as child nodes 201, 202 and 203 shown in FIG. 1, the IAB-DU functional unit 102 may communicate with the child nodes 201, 202 and 203 via an air interface (Uu); neighboring nodes connected to an interface of the IAB-MT functional unit 101 are called parent nodes, such as parent nodes 301 and 302 shown in FIG. 1, the IAB-MT functional unit 101 may communicate with the parent nodes 301 and 302 via the air interface (Uu).

As shown in FIG. 1, a direction from the IAB-node 100 to the child nodes 201, 202, and 203 is called a downstream direction, and a direction from the IAB-node 100 to the parent nodes 301 and 302 is called an upstream direction. An IAB-donor (not shown) performs centralized resource management, topology management and routing management for the IAB topological structure 10.

It should be noted that the above introduction to the technical background is just to facilitate a clear and complete description of the technical solutions of the present disclosure, and is elaborated to facilitate the understanding of persons skilled in the art. It cannot be considered that said technical solutions are known by persons skilled in the art just because these solutions are elaborated in the Background of the present disclosure.

### SUMMARY

In a multi-hop scenario, in order to implement relay forwarding of a data packet, an IAB-node needs to determine a destination node to which the data packet reaches, and then determines a next-hop node corresponding to the destination node according to a routing table and transmits the next-hop node. A donor-CU configures the IAB-node with mapping from each uplink F1-U tunnel initiated by the IAB-node, a non-UE associated F1AP message, a UE-associated F1AP message and non-F1 traffic to a BAP routing identity via F1AP (F1 application protocol) signaling.

The IAB-node determines BAP routing identities corresponding to different types of uplink IP packets initiated from the IAB-node according to routing identity mapping information, and encapsulates BAP subheaders containing BAP routing identity information for these uplink IP packets. The donor-CU configures the donor-DU with mapping from different types of downlink data packets to a BAP routing identity via the F1AP signaling. The donor-DU determines BAP routing identities corresponding to the received downlink IP packets according to the routing identity mapping information, and encapsulates downlink BAP subheaders containing BAP routing identities for these downlink IP packets.

The BAP routing identity includes a destination BAP address and a path identity from the IAB-node to the donor-DU. The BAP address is also called a DESTINATION in a BAP header. Each IAB-node and donor-DU are configured with a BAP address.

At the time of IAB-node initiation (integration), RRC may configure a default backhaul (BH) RLC channel and a default BAP routing identity for non-F1-U traffic. These configurations may be updated in a topology adaptation scenario.

In an upstream direction, the IAB-donor-CU configures the IAB-node with a mapping relationship between upstream F1 and non-F1 traffic originating from the IAB-node and an appropriate BAP routing ID, a next-hop BAP address, as well as BH RLC channels. A specific mapping relationship is configured for each F1-U GTP-U tunnel, a non-UE-associated F1AP message, a UE-associated F1AP message, and non-F1 traffic.

The IAB-node may have redundant paths to different IAB-donor-CUs. For an IAB-node that works in a Stand Alone (SA) mode, the IAB-MT may be allowed to have backhaul links to two parent nodes simultaneously via NR-DC (NR-NR Dual Connectivity), so as to achieve route redundancy of backhaul. Two parent nodes may be connected to different IAB-donor-CUs, and these IAB-donor-CUs may control establishment and release of redundant routes passing through the two parent nodes. The gNB-DU function of the parent node, together with a corresponding IAB-donor-CU, achieves a role of a master node (MN) and/or a node secondary (SN) of an IAB-MT. A Framework of the NR-DC -- such as MCG (master cell group)/SCG (secondary cell group) related procedures -- is used to configure dual radio connection between the IAB-node and the parent node.

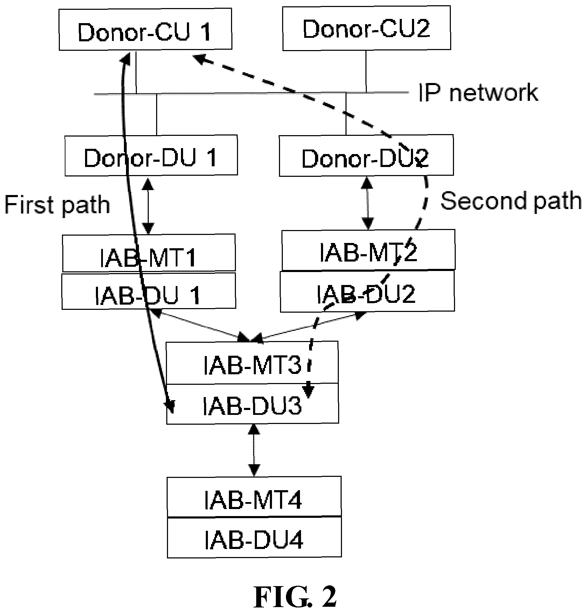

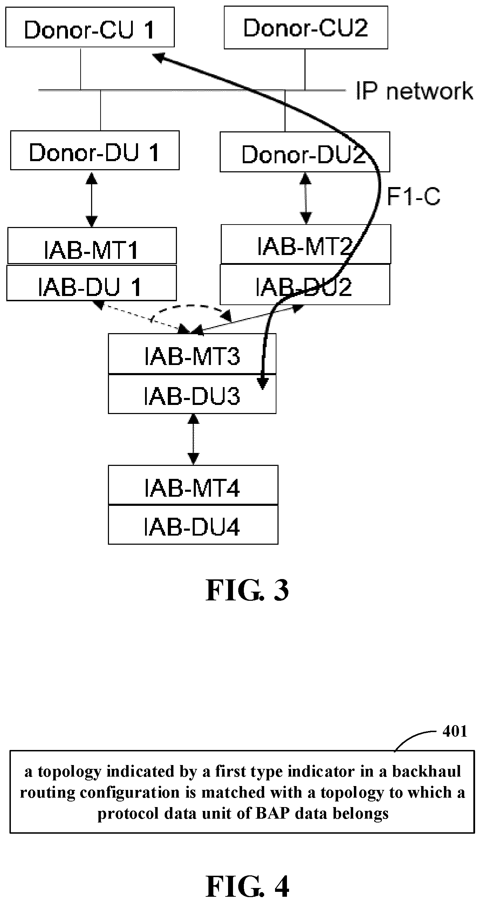

FIG. 2 is a schematic diagram of a network structure of inter-donor topology redundancy (or inter-CU topology redundancy). FIG. 3 is a schematic diagram of inter-donor partial migration.

As shown in FIG. 2, node 3 is called a boundary IAB-node. The boundary IAB-node refers to that an RRC interface and the F1 interface of the IAB node are terminated to different IAB-donor-CUs. The boundary IAB-node is applicable to partial migration, inter-donor topology redundancy, and inter-donor radio link failure (RLF) recovery. As shown in FIG. 2, a DU of node 3 is terminated to CU1, and an MT of node 3 has an interface to both CU1 and CU2, thus meeting the definition of the boundary IAB-node. Descendant IAB-node is a node that is accessed to a network via the boundary IAB-node, and each node is single-connected to its own parent node, for example, IAB-node 4 is a descendant node. F 1-terminating donor node refers to a donor-CU that terminates F1 interfaces of the boundary IAB-node and the descendant node. For example, donor-CU1 is an F1 terminating node, that is, F1 interfaces of IAB-DU3 and IAB-DU4 in FIG. 2 are terminated to donor-CU1. Non-F1-terminating donor node refers to a CU that does not terminate F1 interfaces of the boundary IAB-node and the descendant node and has a donor function, such as donor-CU2 in FIG. 2. In the topology redundancy scenario shown in FIG. 2, the boundary node (i.e., node 3) is a dual-connected node. In the inter-donor topology redundancy scenario, the boundary IAB-node (i.e., IAB-node 3) and the descendant node may communicate with CU1 via a first path and a second path, respectively.

In FIG. 3, the IAB-MT (i.e., IAB-MT3) of the boundary IAB-node may be migrated to a parent node under a different IAB-donor-CU (for example, migrated to a parent node under Donor-CU2). In this situation, collocated IAB-DU (i.e., IAB-DU3) and IAB-DU (e.g., IAB-DU4) of the descendant node maintain F1 connections to an original IAB-donor-CU (e.g., Donor-CU1). This migration is called inter-donor partial migration. After the inter-donor partial migration, F1 traffic of the IAB-DU of the boundary IAB-node and of the descendant node are routed via a BAP layer of an IAB topology to which the IAB-MT of the boundary IAB-node is migrated. The SA mode is capable of supporting the inter-donor partial migration.

When an IAB-node in the SA mode declares RLF of a backhaul link, it may perform RLF recovery at parent nodes under different IAB-donor-CUs. Same as the inter-donor partial migration, the collocated IAB-DU and IAB-DU of the descendant node maintain F1 connection to an IAB-donor-CU.

As shown in FIG. 3, IAB-node 3 is a boundary IAB-node, and IAB-MT3 changes from single connection to IAB-node 1 of a parent node to single connection to IAB-node 2 of the parent node. Both IAB-DU3 and IAB-node 4 of its child node still have their F1 connections with donor-CU1, but a path through which the F1 connection passes finally reaches donor-CU1 via the IAB-node 2. In the inter-donor partial migration scenario shown in FIG. 3, the boundary node (node 3) is a migrating node. The inter-donor partial migration scenario also applies to partial RLF recovery.

The inventor of the present disclosure finds that the boundary IAB-node belongs to two IAB topologies, when configuring the IAB-node with uplink traffic mapping or performing BAP routing, a related art does not show that a routing ID belongs to which topology, which leads to a routing ID conflict or ambiguity; moreover, when performing BH RLC channel mapping, a topology is not considered, which leads to unclear link indicator and is not capable of perform BH RLC channel mapping correctly.

Embodiments of the present disclosure provide a method for configuring information and an apparatus therefor, and a communication system, matching a topology in a backhaul routing configuration indicated by a first type indicator with a topology to which a protocol data unit (PDU) of BAP data belongs. Hence, appropriate routing entries may be selected for a BAP data PDU.

According to one aspect of the embodiments of the present disclosure, an apparatus for configuring information is provided, applicable to an IAB-node, the apparatus including a first processing unit, the first processing unit being configured to:
match a topology indicated by a first type indicator in a backhaul routing configuration with a topology to which a protocol data unit (PDU) of BAP data belongs.

According to another aspect of the embodiments of the present disclosure, an apparatus for configuring information is provided, applicable to an IAB-node, the apparatus including a second processing unit, the second processing unit being configured to:
receive uplink traffic to routing ID mapping configuration information, the configuration information including a second type indicator, the second type indicator being used to indicate whether an entry belongs to a topology of a non-F1-terminating donor.

According to another aspect of the embodiments of the present disclosure, an apparatus for configuring information is provided, applicable to an IAB-node, the apparatus including a third processing unit, the third processing unit being configured to:
perform BH RLC channel mapping for BAP data packets from collocated BAP entities, or perform BH RLC channel mapping for a BAP SDU from an upper layer, according to topology information on a link to which a BH RLC channel belongs.

An advantageous effect of the embodiments of the present disclosure lies in: appropriate routing entries may be selected for a BAP data PDU.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of an IAB parent-child node relationship;
FIG. 2 is a schematic diagram of a network structure of inter-donor topology redundancy;
FIG. 3 is a schematic diagram of inter-donor partial migration;
FIG. 4 is a schematic diagram of a method for configuring information in the embodiments of a first aspect;
FIG. 5 is a schematic diagram of a method for configuring information in the embodiments of a second aspect;
FIG. 6 is a schematic diagram of a method for configuring information in the embodiments of a third aspect;
FIG. 7 is a schematic diagram of a method for configuring information in the embodiments of a fourth aspect;
FIG. 8 is a schematic diagram of an apparatus for configuring information in the embodiments of a fifth aspect;
FIG. 9 is a schematic diagram of an apparatus for configuring information in the embodiments of a sixth aspect;
FIG. 10 is a schematic diagram of an apparatus for configuring information in the embodiments of a seventh aspect; and
FIG. 11 is a schematic diagram of composition of an electronic device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: an Integrated Access and Backhaul node (IAB-node), a relay, a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT), a mobile termination (MT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above.

In each embodiment of the present disclosure, higher-layer signaling may be e.g. radio resource control (RRC) signaling; for example, is called an RRC message, for example includes an MIB, system information, and a dedicated RRC message; or is called an RRC information element (RRC IE). The higher-layer signaling e.g. may further be F1-C signaling, or is called an F1AP protocol. However, the present disclosure is not limited to this.

In the present application, a multi-hop IAB network deployment scenario is used as an example to illustrate each embodiment, multiple terminal equipments (for example, UEs) are connected to an IAB-donor via a multi-hop IAB-node and finally access a network, the network for example is a 5G network. It should be noted that each embodiment of the present disclosure may not be limited to the above scenario.

In each embodiment of the present disclosure, an IAB topology refers to a unison of all IAB-nodes and IAB-donor-DUs which perform interconnection via backhaul links and are terminated to the same IAB-donor-CU via an F1 interface and/or RRC. For example, in FIG. 2 and FIG. 3: Donor-DU1, IAB-node 1, IAB-node 3 and IAB-node 4 are nodes managed by Donor-CU1, and an IAB topology network consisting of them and Donor-CU1 is called a first topology; Donor-DU2, IAB-node 2 and IAB-node 3 are nodes managed by Donor-CU2, and an IAB topology network consisting of them and Donor-CU2 is called a second topology. The boundary node (i.e., IAB-node 3) belongs to both the first topology and the second topology.

### Embodiments of a first aspect

In a BH Routing Configuration (i.e., a BAP routing table) of a BAP sublayer, each entry contains a BAP routing identity, a next-hop BAP address, and a first type indicator that indicates whether the entry belongs to a topology of a non-F1 terminating donor. The first type indicator is configured by a non-F1-terminating topology indicator IE in F1AP signaling.

The first type indicator may be a Boolean variable. For example, if the entry is configured with a non-F1-terminating topology indicator in the F1AP signaling, the first type indicator is of a first value, for example the first value is true; otherwise, if the entry is not configured with a non-F1-terminating topology indicator in the F1AP signaling, the first type indicator is of a second value, for example the second value is false.

The first type indicator may further be an enumerated variable, and indicates a specific topology type. For example, if the entry is configured with a non-F1-terminating topology indicator in the F1AP signaling, the first type indicator is "a non-F1-terminating topology"; otherwise, if the entry is not configured with a non-F1-terminating topology indicator in the F1AP signaling, the first type indicator is "an F1-terminating topology".

In the scenario shown in FIG. 2, the boundary node (such as IAB-node 3) connects to different IAB topologies, and in uplink BAP routing identities used by the boundary nodes, there may be BAP routing identities leading to two IAB topologies (that is, to donor-DUs under two different donor-CUs), respectively. Because BAP routing identities of different IAB topologies are configured and managed by their respective donor-CUs, BAP routing identities belonging to different IAB topologies may conflict. Similarly, in the scenario shown in FIG. 3, in the boundary node, an uplink BAP routing identity in the non-F1-terminating topology may conflict with a downlink BAP routing identity in the F1-terminating topology.

To solve the above problem and similar problems, embodiments of a first aspect of the present disclosure provide a method for configuring information. The method is applied to an IAB-node.

FIG. 4 is a schematic diagram of a method for configuring information in the embodiments of a first aspect, as shown in FIG. 4, the method includes:
operation 401, a topology indicated by a first type indicator in a backhaul routing configuration is matched with a topology to which a protocol data unit (PDU) of BAP data belongs.

In the embodiments of the first aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 401, when the boundary IAB-node performs BAP routing, a topology indicated by a first type indicator in a backhaul routing configuration needs to match with a topology to which a protocol data unit (PDU) of BAP data belongs, whereby suitable routing entries are selected for the PDU of BAP data. The topology to which the PDU of BAP data belongs refers to a topology in which the PDU needs to be routed or egress link selection is performed, or may be deemed as an egress topology.

In at least some embodiments, when a BAP entity needs to transmit a BAP data PDU, if a BAP address of an entry in the backhaul routing configuration matches a DESTINATION field, a path identity of the entry is identical to a PATH field, a topology of the entry obtained by the first type indicator is identical to a topology of the BAP data PDU, and an egress link to which a next-hop BAP address corresponds is available, the egress link to which the next-hop BAP address of the entry corresponds is selected.

In at least some other embodiments, if the above conditions are not met, i.e., a BAP address of the entry matching all the above conditions about a DESTINATION field, a PATH field and a topology does not exist in the backhaul routing configuration, or an egress link to which a matched entry corresponds is unavailable, then, if a BAP address of at least one entry in the backhaul routing configuration matches the "Destination" field, a topology of this entry indicated by the first type indicator is the same as a topology of the BAP data PDU, and an egress link corresponding to a next-hop BAP address is available, one of entries is selected, its BAP address matches the "Destination" field, a topology of this entry obtained by the first type indicator is the same as a topology of the BAP data PDU, and an egress link corresponding to a next-hop BAP address is available. Then, an egress link corresponding to a next-hop BAP address of this entry is selected.

For example, the routing procedure portion of the BAP sublayer standard may be enhanced in TS 38.340. An example is shown in Table 1.

**Table 1**

| For a BAP Data PDU to be transmitted, BAP entity shall: | | |
|---|---|---|
| | - if the BAP Data PDU corresponds to a BAP SDU received from the upper layer, and | |
| | - if the BH Routing Configuration has not been (re)configured by F1AP after the last (re)configuration *of defaultUL-BH-RLC-Channel* by RRC: | |
| | | - select the egress link on which the egress BH RLC channel corresponding to *defaultUL-BH-RLC-Channel* is configured as specified in TS 38.331 [3] for non-F1-U packets; |
| | - else if there is an entry in the BH Routing Configuration whose BAP address matches the DESTINATION field, whose BAP path identity is the same as the PATH field, whose topology according to Type indicator is the same as the topology of this BAP Data PDU, and whose egress link corresponding to the Next Hop BAP Address is available: | |
| | | - select the egress link corresponding to the Next Hop BAP Address of the entry; |
| | - else if there is at least one entry in the BH Routing Configuration whose BAP address matches the DESTINATION field, whose topology according to Type indicator is the same as the topology of this BAP Data PDU, and whose egress link corresponding to the Next Hop BAP Address is available: | |
| | | - select an entry from the BH Routing Configuration whose BAP address is the same as the DESTINATION field, whose topology according to Type indicator is the same as the topology of this BAP Data PDU, and whose egress link corresponding to the Next Hop BAP Address is available; |
| | | - select the egress link corresponding to the Next Hop BAP Address of the entry selected above; |

The boundary IAB-node belongs to multiple topologies, and a BAP routing identity, a path identity, a BAP address, etc. are unique only within a topology, thus in order to select uniqueness of routing, in the backhaul routing configuration, for the same topology, i.e., the same first type indicator, each combination of a BAP address and a BAP path indicator may only have at most one entry. In order to perform local rerouting, in the backhaul routing configuration, for the same first type indicator, the same BAP address may have a plurality of entries.

For example, the routing procedure portion of the BAP sublayer standard may be enhanced in TS 38.340. An example is shown in Table 2.

**Table 2**

| |
|---|
| For each combination of a BAP address and a BAP path identity with the same Type indicator, there should be at most one entry in the BH Routing Configuration. There could be multiple entries of the same BAP address with the same Type indicator in the BH Routing Configuration. |

The embodiments of the first aspect describe a situation in which the IAB-node is an intermediate node of traffic (i.e., the IAB-node receives and forwards data from other nodes). Through the embodiments of the first aspect, suitable routing entries and egress links may be selected for BAP data PDUs.

### Embodiments of a second aspect

In an upstream direction, the IAB-donor-CU configures the IAB-node with a mapping relationship between upstream F1 and non-F1 traffic originating from the IAB-node (i.e., the IAB-node is an initial node of uplink traffic) and an appropriate BAP routing ID, a next-hop BAP address, as well as BH RLC channels. A specific mapping relationship is configured for each F1-U GTP-U tunnel, a non-UE-associated F1AP message, a UE-associated F1AP message, and non-F1 traffic. Because the boundary IAB-node belongs to multiple topologies, in an uplink mapping configuration of the boundary IAB-node, BH Information IE in the F1AP signaling needs to indicate a specific topology to which it belongs. For example, there is a non-F1-terminating topology indicator, if configured, it represents that a next-hop BAP address and an egress BH RLC channel identity in the IE belong to a non-F1-terminating topology of the boundary IAB-node.

In Uplink Traffic to Routing ID Mapping Configuration of a BAP sublayer, each entry contains a traffic type specifier and a BAP routing identity (ID). Because a boundary node belongs to multiple topologies, the BAP routing ID may be ambiguous.

To solve the above problem and similar problems, embodiments of a second aspect of the present disclosure provide a method for configuring information. The method is applied to an IAB-node.

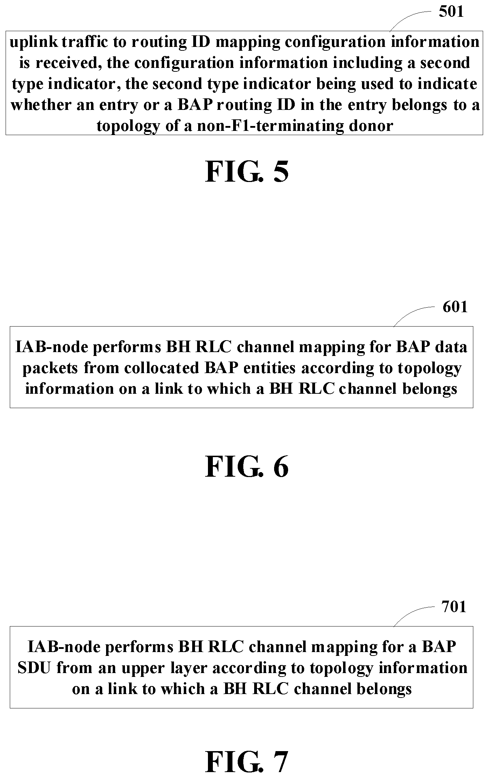

FIG. 5 is a schematic diagram of a method for configuring information in the embodiments of a second aspect. As shown in FIG. 5, the method includes:
operation 501, uplink traffic to routing ID mapping configuration information is received, the configuration information including a second type indicator, the second type indicator being used to indicate whether an entry or a BAP routing ID in the entry belongs to a topology of a non-F1-terminating donor.

In the embodiments of the second aspect, the IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 501, a second type indicator may be added to each mapping relationship (i.e., each entry), the second type indicator is used to indicate whether a BAP routing ID (in other word, the entry) belongs to a topology of a non-F1-terminating donor, and the second type indicator may be indicated (or configured) by a non-F1-terminating topology indicator IE in F1 application protocol (AP) signaling.

In at least some embodiments, the second type indicator may be a Boolean variable, for example if the entry is configured with a non-F1-terminating topology indicator in the F1AP signaling, the second type indicator has a first value, for example the second type indicator is true, otherwise if the entry is not configured with a non-F1-terminating topology indicator in the F1AP signaling, the second type indicator has a second value, for example the second type indicator is false.

In at least some other embodiments, the second type indicator may further be an enumerated variable, and is used to indicate a specific topology type. For example if the entry is configured with a non-F1-terminating topology indicator in the F1AP signaling, the second type indicator is "a non-F1-terminating topology", otherwise if the entry is not configured with a non-F1-terminating topology indicator in the F1AP signaling, the second type indicator is "an F1-terminating topology".

For example, the BAP sublayer standard may be enhanced in TS 38.340. Enhancement shown in Table 3 may be performed in a BAP routing ID selection process of the IAB-node.

**Table 3**

| | |
|---|---|
| Each entry of the Uplink Traffic to Routing ID Mapping Configuration contains: | |
| | - a traffic type specifier, which is indicated by *UL UP TNL Information* IE for F1-U packets and *Non-UP Traffic Type* IE for non-F1-U packets in TS 38.473 [5], |
| | - a BAP routing ID, which includes a BAP address and a BAP path identity, indicated by *BAP Routing ID* IE in *BH Information* IE in TS 38.473 [5], and |
| | - a Type indicator, indicating whether the BAP routing ID belongs to the non-F1-terminating donor topology, which is indicated by *Non-F1-terminating Topology Indicator* IE. |

In at least some embodiments, when a BAP service data unit (SDU) is received from an upper layer by the IAB-node and the BAP SDU needs to be transmitted to an uplink direction, a BAP entity may determine a topology to which data needs to be transmitted via an uplink traffic to routing ID mapping relationship, and performs routing in a corresponding topology.

In at least one specific implementation, when the BAP service data unit (SDU) is received from the upper layer by the IAB-node and needs to be transmitted to the uplink direction, after the BAP entity selects an entry in an uplink traffic to routing ID mapping configuration according to a traffic type specifier to which the BAP SDU corresponds, the BAP entity determines a topology of a BAP data PDU to which the BAP SDU corresponds according to the second type indicator in the entry. That is, if a selected entry or a second type indicator corresponding to the BAP routing ID (that is, a BAP address and a BAP path ID) refers to a non-F1-terminating topology, a BAP data PDU corresponding to the BAP SDU is data belonging to a non-F1-terminating donor topology; otherwise, if the second type indicator corresponding to the selected BAP routing ID refers to an F1-terminating topology, a BAP data PDU corresponding to the BAP SDU is data belonging to an F1-terminating donor topology.

For example, the BAP sublayer standard may be enhanced in TS 38.340. Enhancement shown in Table 4 may be performed in a BAP routing ID selection process of the IAB-node.

**Table 4**

| | | |
|---|---|---|
| At the IAB-node, for a BAP SDU received from upper layers and to be transmitted in upstream direction, the BAP entity shall: | | |
| | - if the Uplink Traffic to Routing ID Mapping Configuration has not been (re)configured by F1AP after the last (re)configuration of *defaultUL-BAP-RoutingID* by RRC: | |
| | | - select the BAP address and the BAP path identity as configured by *defaultUL-BAP-RoutingID* in TS 38.331 [3] for non-F1-U packets; |
| | - else: | |
| | - for the BAP SDU encapsulating an F1-U packet: | |
| | | - select an entry from the Uplink Traffic to Routing ID Mapping Configuration with its traffic type specifier corresponds to the destination IP address and TEID of this BAP SDU; |
| | - for the BAP SDU encapsulating a non-F1-U packet: | |
| | | - select an entry from the Uplink Traffic to Routing ID Mapping Configuration with its traffic type specifier corresponds to the traffic type of this BAP SDU; |
| | - select the BAP address and the BAP path identity from the BAP routing ID in the entry selected above; | |
| | - if the Type indicator corresponding to the selected BAP routing ID indicates the non-F1-terminating topology: | |
| | - consider the BAP Data PDU corresponding to this BAP SDU as non-F1-terminating donor topology data; | |

In the embodiments of the second aspect, the BAP entity obtains the BAP routing ID and topology information of the BAP data PDU through the BAP routing ID selection process, and then may perform BAP routing according to the method recorded in the embodiments of the first aspect.

### Embodiments of a third aspect

For a BAP packet received from collocated BAP entities, that is, a BAP packet that needs to be forwarded, a transmission part of the BAP entity performs mapping to an egress BH RLC channel according to a BH RLC Channel Mapping Configuration. An entry of the BH RLC Channel Mapping Configuration contains an ingress link identity, an egress link identity, an ingress BH RLC channel identity and an egress BH RLC channel identity.

For inter-donor routing in FIG. 2 and FIG. 3, when the boundary IAB-node performs BH RLC channel mapping for a BAP packet from collocated BAP entities, if topology information of a link to which a BH RLC channel belongs is not taken into account, link selection and BH RLC channel mapping is unclear.

To solve the above problem or similar problems, embodiments of the third aspect provide a method for configuring information, the method is applicable to an IAB-node.

FIG. 6 is a schematic diagram of a method for configuring information in the embodiments of a third aspect. As shown in FIG. 6, the method includes:
operation 601, the IAB-node performs BH RLC channel mapping for BAP data packets from collocated BAP entities according to topology information on a link to which a BH RLC channel belongs. In the operation 601, when the IAB-node performs BH RLC channel mapping, a topology to which an ingress link belongs in a backhaul RLC channel mapping configuration needs to match with a topology to which an ingress link of a BAP data PDU belongs, and a topology to which an egress link belongs in the backhaul RLC channel mapping configuration needs to match with a topology to which a selected egress link belongs, so as to select suitable mapping entries and egress BH RLC channels for BAP data PDUs.

In the embodiments of the third aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 601, for a BAP data PDU received from an ingress BH RLC channel on an ingress link, after an egress link is selected according to a BAP sublayer routing method, if there is an entry in BH RLC channel mapping configuration, its ingress BH RLC channel identity matches the ingress BH RLC channel of the BAP data PDU, its ingress link identity matches the ingress link of the BAP data PDU, a topology to which its ingress link identity belongs is identical to a topology to which the ingress link of the BAP data PDU belongs, its egress link identity corresponds to the selected egress link and a topology to which its egress link identity belongs is identical to a topology to which the selected egress link belongs, an egress BH RLC channel to which an egress BH RLC channel identity in the entry corresponds is selected.

For example, the BAP sublayer standard may be enhanced in TS 38.340. Enhancement shown in Table 5 may be performed in a process of performing BH RLC channel mapping for BAP packets from collocated BAP entities at the IAB-node.

**Table 5**

| | | |
|---|---|---|
| For a BAP Data PDU received from an ingress BH RLC channel of an ingress link and for which the egress link has been selected as specified in clause 5.2.1.3: | | |
| | - if there is an entry in the BH RLC Channel Mapping Configuration, whose ingress BH RLC channel ID matches the BAP Data PDU's ingress BH RLC channel, whose ingress link ID matches the BAP Data PDU's ingress link, whose ingress link ID's topology is the same as the BAP Data PDU's ingress link's topology, whose egress link ID corresponds to the selected egress link, and whose egress link ID's topology is the same as the selected egress link's topology: | |
| | | - select the egress BH RLC channel corresponding to egress BH RLC channel ID of this entry; |
| | - else: | |
| | | - select any egress BH RLC channel on the selected egress link; |

In the embodiments of the third aspect, the IAB-node may be an intermediate node of traffic, and when performing BH RLC channel mapping for a BAP packet from collocated BAP entities, topology information of a link to which a BH RLC channel belongs may be taken into account, so as to avoid a situation in which link selection and BH RLC channel mapping are unclear.

### Embodiments of a fourth aspect

When an IAB-node receives a BAP SDU from an upper layer, a BAP entity may perform mapping to an egress BH RLC channel according to an Uplink Traffic to BH RLC Channel Mapping Configuration. An entry of the Uplink Traffic to BH RLC Channel Mapping Configuration contains a traffic type specifier, an egress link identity and an egress BH RLC channel identity.

For inter-donor routing in FIG. 2 and FIG. 3, when the boundary IAB-node performs BH RLC channel mapping for a BAP SDU from an upper layer, if topology information of a link to which a BH RLC channel belongs is not taken into account, link selection and BH RLC channel mapping is unclear.

To solve the above problem or similar problems, embodiments of the fourth aspect provide a method for configuring information, the method is applicable to an IAB-node.

FIG. 7 is a schematic diagram of a method for configuring information in the embodiments of a third aspect. As shown in FIG. 7, the method includes:
operation 701, the IAB-node performs BH RLC channel mapping for a BAP SDU from an upper layer according to topology information on a link to which a BH RLC channel belongs. In the operation 701, when the IAB-node performs BH RLC channel mapping, a topology to which an egress link belongs in the Uplink Traffic to BH RLC Channel Mapping Configuration needs to match with a topology to which a selected egress link belongs, so as to select suitable mapping entries and egress BH RLC channels for BAP SDUs.

In the embodiments of the fourth aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 701, after the IAB-node receives a BAP SDU from an upper layer and is about to transmit it to an upstream direction, and a BAP entity selects an egress link according to a BAP sublayer routing method, for a BAP SDU encapsulated with F1-U data packets, if there is an entry in the Uplink Traffic to BH RLC Channel Mapping Configuration, its traffic type specifier corresponds to a destination IP address and a TEID (tunnel endpoint identifier) of the BAP SDU, its egress link identity corresponds to the selected egress link and the topology to which its egress link identity belongs is identical to the topology to which the selected egress link belongs, the egress BH RLC channel to which the egress BH RLC channel identity in the entry corresponds is selected. Similarly, for a BAP SDU encapsulated with non-F1-U data packets, if there is an entry in the Uplink Traffic to BH RLC Channel Mapping Configuration, its traffic type specifier corresponds to a traffic type of the BAP SDU, its egress link identity corresponds to the selected egress link and the topology to which its egress link identity belongs is identical to the topology to which the selected egress link belongs, the egress BH RLC channel to which the egress BH RLC channel identity in the entry corresponds is selected.

For example, the BAP sublayer standard may be enhanced in TS 38.340. Enhancement shown in Table 6 may be performed in a process of performing BH RLC channel mapping for a BAP SDU from an upper layer at the IAB-node.

**Table 6**

| | | | | |
|---|---|---|---|---|
| For a BAP SDU received from upper layers at the IAB-node and to be transmitted in upstream direction, whose egress link has been selected as specified in clause 5.2.1.3, the BAP entity shall: | | | | |
| | - if the Uplink Traffic to BH RLC Channel Mapping Configuration has not been (re)configured by F1AP after the last (re)configuration of *defaultUL-BH-RLC-Channel* by RRC: | | | |
| | | - select the egress BH RLC channel corresponding to *defaultUL-BH-RLC-Channel* configured in TS 38.331 [3] for non-F1-U packets; | | |
| | - else: | | | |
| | | - for the BAP SDU encapsulating an F1-U packet: | | |
| | | | - if there is an entry in the Uplink Traffic to BH RLC Channel Mapping Configuration with its traffic type specifier corresponds to the destination IP address and TEID of this BAP SDU, its egress link ID corresponding to the selected egress link and its egress link ID's topology is the same as the selected egress link's topology: | |
| | | | | - select the egress BH RLC channel corresponding to the egress BH RLC channel ID of this entry; |
| | | | - else: | |
| | | | | - select any egress BH RLC channel on the selected egress link; |
| | | - for the BAP SDU encapsulating a non-F1-U packet: | | |
| | | | - if there is an entry from the Uplink Traffic to BH RLC Channel Mapping Configuration with its traffic type specifier corresponds to the traffic type of this BAP SDU, its egress link ID corresponding to the selected egress link, and its egress link ID's topology is the same as the selected egress link's topology: | |
| | | | | - select the egress BH RLC channel corresponding to the egress BH RLC channel ID of this entry; |
| | | | - else: | |
| | | | | - select any egress BH RLC channel on the selected egress link; |

In the embodiments of the fourth aspect, the IAB-node may be an initial node of uplink traffic, and when performing BH RLC channel mapping for a BAP SDU from an upper layer, topology information of a link to which a BH RLC channel belongs may be taken into account, so as to avoid a situation in which link selection and BH RLC channel mapping are unclear.

### Embodiments of a fifth aspect

Embodiments of a fifth aspect of the present disclosure provide an apparatus for configuring information, corresponding to the method for configuring information in the embodiments of the first aspect. The apparatus is applied to an IAB-node.

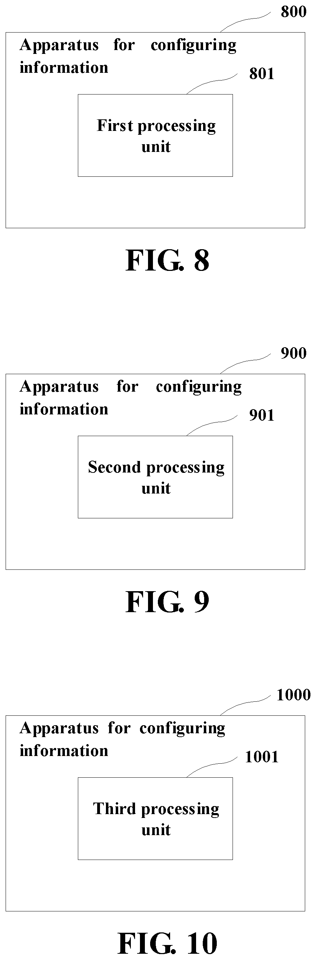

FIG. 8 is a schematic diagram of an apparatus for configuring information in the embodiments of a fifth aspect, as shown in FIG. 8, an apparatus 800 for configuring information includes:
a first processing unit 801, configured to match a topology indicated by a first type indicator in a backhaul routing configuration with a topology to which a protocol data unit (PDU) of BAP data belongs.

In the embodiments of the fifth aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

In the embodiments of the fifth aspect, when performing BAP routing, a topology indicated by a first type indicator in a backhaul routing configuration may match with a topology to which a protocol data unit (PDU) of BAP data belongs, whereby suitable routing entries are selected for the PDU of BAP data.

In at least some embodiments, when a BAP entity needs to transmit a BAP data PDU, if a BAP address of an entry in the backhaul routing configuration matches a DESTINATION field, a path identity of the entry is identical to a PATH field, a topology of the entry obtained by the first type indicator is identical to a topology of the BAP data PDU and an egress link to which a next-hop BAP address corresponds is available, the egress link to which the next-hop BAP address of the entry corresponds is selected.

In at least some other embodiments, if the above conditions are not met, i.e., entry matching all the above conditions about a DESTINATION field, a PATH field and a topology does not exist in the backhaul routing configuration, or an egress link to which a matched entry corresponds is unavailable, then, if a BAP address of at least one entry in the backhaul routing configuration matches the "Destination" field, a topology of this entry indicated by the first type indicator is the same as a topology of the BAP data PDU, and an egress link corresponding to a next-hop BAP address is available, one of entries is selected, its BAP address matches the "Destination" field, a topology of this entry obtained by the first type indicator is the same as a topology of the BAP data PDU, and an egress link corresponding to a next-hop BAP address is available. Then, an egress link corresponding to a next-hop BAP address of this entry is selected.

The boundary IAB-node belongs to multiple topologies, and a BAP routing identity, a path identity, a BAP address, etc. are unique only within a topology, thus in order to select uniqueness of routing, in the backhaul routing configuration, for the same topology, i.e., the same first type indicator, each combination of a BAP address and a BAP path indicator may only have at most one entry. In order to perform local rerouting, in the backhaul routing configuration, for the same first type indicator, the same BAP address may have a plurality of entries.

The embodiments of the fifth aspect describe a situation in which the IAB-node is an intermediate node of traffic (i.e., the IAB-node receives and forwards data from other nodes). Through the embodiments of the fifth aspect, suitable routing entries may be selected for BAP data PDUs.

### Embodiments of a sixth aspect

Embodiments of a sixth aspect of the present disclosure provide an apparatus for configuring information. The apparatus is applicable to an IAB-node, and corresponds to the method for configuring information in the embodiments of the second aspect. FIG. 9 is a schematic diagram of an apparatus for configuring information in the embodiments of a sixth aspect. As shown in FIG. 9, an apparatus 900 includes a second processing unit 901.

The second processing unit 901 is configured to: receive uplink traffic to routing ID mapping configuration information, the configuration information including a second type indicator, the second type indicator being used to indicate whether an entry or a BAP routing ID in the entry belongs to a topology of a non-F1-terminating donor.

In the embodiments of the sixth aspect, the IAB-node may be a boundary IAB-node, such as IAB-node 3 as shown in FIG. 2 or FIG. 3. In addition, the IAB-node in the present disclosure is not limited to this, and the IAB-node may further be of other types.

In at least one embodiment, a second type indicator may be added to each mapping relationship (i.e., each entry), the second type indicator is used to indicate whether a BAP routing ID (in other word, the entry) belongs to a topology of a non-F1-terminating donor, and the second type indicator may be indicated (or configured) by a non-F1-terminating topology indicator IE in F1 application protocol (AP) signaling.

In at least some embodiments, the second type indicator may be a Boolean variable, for example if the entry is configured with a non-F1-terminating topology indicator in the F1AP signaling, the second type indicator has a first value, for example the second type indicator is true, otherwise if the entry is not configured with a non-F1-terminating topology indicator in the F1AP signaling, the second type indicator has a second value, for example the second type indicator is false.

In at least some other embodiments, the second type indicator may further be an enumerated variable, and is used to indicate a specific topology type. For example if the entry is configured with a non-F1-terminating topology indicator in the F1AP signaling, the second type indicator is "a non-F1-terminating topology", otherwise if the entry is not configured with a non-F1-terminating topology indicator in the F1AP signaling, the second type indicator is "an F1-terminating topology".

In at least some embodiments, when a BAP service data unit (SDU) is received from an upper layer by the IAB-node and the BAP SDU needs to be transmitted to an uplink direction, a BAP entity may determine a topology to which data needs to be transmitted via an uplink traffic to routing ID mapping relationship, and performs routing in a corresponding topology.

In at least one specific implementation, when the BAP service data unit (SDU) is received from the upper layer by the IAB-node and needs to be transmitted to the uplink direction, after the BAP entity selects an entry in an uplink traffic to routing ID mapping configuration according to a traffic type specifier to which the BAP SDU corresponds, the BAP entity determines a topology of a BAP data PDU to which the BAP SDU corresponds according to the second type indicator in the entry. That is, if a selected entry or a second type indicator corresponding to the BAP routing ID (that is, a BAP address and a BAP path ID) refers to a non-F1-terminating topology, a BAP data PDU corresponding to the BAP SDU is data belonging to a non-F1-terminating donor topology; otherwise, if the second type indicator corresponding to the selected BAP routing ID refers to an F1-terminating topology, a BAP data PDU corresponding to the BAP SDU is data belonging to an F1-terminating donor topology.

In the embodiments of the sixth aspect, the BAP entity obtains the BAP routing ID and topology information of the BAP data PDU through the BAP routing ID selection process, and then may perform BAP routing according to the method recorded in the embodiments of the first aspect.

### Embodiments of a seventh aspect

Embodiments of a seventh aspect provide an apparatus for configuring information, the apparatus is applicable to an IAB-node and corresponds to the method for configuring information in the embodiments of the third aspect or the embodiments of the fourth aspect.

FIG. 10 is a schematic diagram of an apparatus for configuring information in the embodiments of a seventh aspect. As shown in FIG. 10, an apparatus 1000 includes a third processing unit 1001, the third processing unit 1001 being configured to:
perform BH RLC channel mapping for BAP data packets from collocated BAP entities, or perform BH RLC channel mapping for a BAP SDU from an upper layer, according to topology information on a link to which a BH RLC channel belongs.

In the embodiments of the seventh aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

In at least one embodiment, for a BAP data PDU received from an ingress BH RLC channel on an ingress link, after an egress link is selected according to a BAP sublayer routing apparatus, if there is an entry in BH RLC channel mapping configuration, its ingress BH RLC channel identity matches the ingress BH RLC channel of the BAP data PDU, its ingress link identity matches the ingress link of the BAP data PDU, a topology to which its ingress link identity belongs is identical to a topology to which the ingress link of the BAP data PDU belongs, its egress link identity corresponds to the selected egress link and a topology to which its egress link identity belongs is identical to a topology to which the selected egress link belongs, an egress BH RLC channel to which an egress BH RLC channel identity in the entry corresponds is selected.

In at least another embodiment, after the IAB-node receives a BAP SDU from an upper layer and is about to transmit it to an upstream direction, and a BAP entity selects an egress link according to a BAP sublayer routing method, for a BAP SDU encapsulated with F1-U data packets, if there is an entry in the Uplink Traffic to BH RLC Channel Mapping Configuration, its traffic type specifier corresponds to a destination IP address and a TEID (tunnel endpoint identifier) of the BAP SDU, its egress link identity corresponds to the selected egress link and the topology to which its egress link identity belongs is identical to the topology to which the selected egress link belongs, the egress BH RLC channel to which the egress BH RLC channel identity in the entry corresponds is selected. Similarly, for a BAP SDU encapsulated with non-F1-U data packets, if there is an entry in the Uplink Traffic to BH RLC Channel Mapping Configuration, its traffic type specifier corresponds to a traffic type of the BAP SDU, its egress link identity corresponds to the selected egress link and the topology to which its egress link identity belongs is identical to the topology to which the selected egress link belongs, the egress BH RLC channel to which the egress BH RLC channel identity in the entry corresponds is selected.

In the embodiments of the seventh aspect, the IAB-node may be an intermediate node of traffic, and when performing BH RLC channel mapping for a BAP packet from collocated BAP entities, topology information of a link to which a BH RLC channel belongs may be taken into account, so as to avoid a situation in which link selection and BH RLC channel mapping are unclear; or the IAB-node may be an initial node of uplink traffic, and when performing BH RLC channel mapping for a BAP SDU from an upper layer, topology information of a link to which a BH RLC channel belongs may be taken into account, so as to avoid a situation in which link selection and BH RLC channel mapping are unclear.

### Embodiments of an eighth aspect

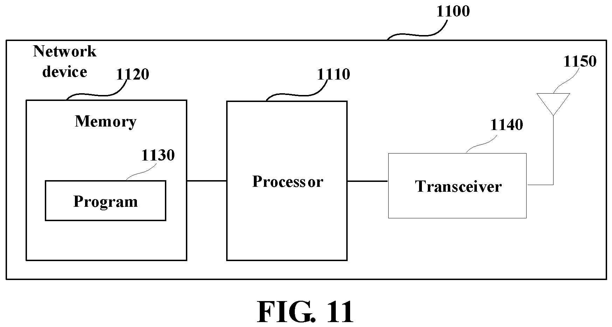

Embodiments of the present disclosure further provide a communication system, which may include an IAB-node and a base station CU. At least one of a MT of the IAB-node, a DU of the IAB-node, and the base station CU may have the composition of the electronic device shown in FIG. 11.

FIG. 11 is a schematic diagram of composition of an electronic device in the embodiments of the present disclosure. As shown in FIG. 11, an electronic device 1100 may include: a processor 1110 (such as a central processing unit (CPU)) and a memory 1120; the memory 1120 is coupled to the processor 1110. The memory 1120 may store various data; moreover, further stores a program 1130 for information processing, and executes the program 1130 under the control of the processor 1110.

For example, the processor 1110 may be configured to execute a program to implement the method in the embodiments of the first to fourth aspects.

In addition, as shown in FIG. 11, the electronic device 1100 may further include: a transceiver 1140 and an antenna 1150, etc., wherein the functions of said components are similar to relevant arts, which are not repeated here. It's worth noting that the electronic device 1100 does not have to include all the components shown in FIG. 11. Moreover, the electronic device 1100 may also include components not shown in FIG. 11, related arts may be referred to.

The embodiments of the present disclosure further provide a computer program, wherein when the program is executed in an IAB-node, the program enables the IAB-node to execute the method as described in the embodiments of the first to fourth aspects.

The embodiments of the present disclosure further provide a storage medium in which a computer program is stored, wherein the computer program enables an electronic device to execute the method described in the embodiments of the first to fourth aspects.

The apparatus and method in the present disclosure may be realized by hardware, or may be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/apparatus described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
1. A method for configuring information, applicable to an IAB-node, the method including:
   matching a topology indicated by a first type indicator in a backhaul routing configuration with a topology to which a protocol data unit (PDU) of BAP data belongs.
2. The method according to Supplement 1, wherein,
   when a BAP entity needs to transmit a BAP data PDU, if a BAP address of an entry in the backhaul routing configuration matches a destination field, a path identity of the BAP address of the entry is identical to a path field of the BAP address, a topology of the BAP address of the entry obtained by the first type indicator is identical to a topology of the BAP data PDU and an egress link to which a next-hop BAP address of the BAP address of the entry corresponds is available, the egress link to which the next-hop BAP address corresponds is selected.
3. The method according to Supplement 1 or 2, wherein,
   if no BAP address of an entry matching the destination field, the path field and the topology exists in the backhaul routing configuration, or an egress link to which a matching entry corresponds is unavailable,
   if there exists a BAP address of at least one entry in the backhaul routing configuration matching the destination field, the topology of the entry obtained by the first type indicator is identical to the topology of the BAP data PDU and the egress link to which the next-hop BAP address corresponds is available, an entry is selected from the at least one entry, and an egress link to which the next-hop BAP address of the entry corresponds is selected.
4. The method according to Supplement 1, wherein,
   in the backhaul routing configuration, for identical first type indicators, each combination of BAP address and BAP path indicator corresponds to at most one entry.
5. The method according to Supplement 1, wherein,
   in the backhaul routing configuration, for identical first type indicators, each BAP address corresponds to at least one entry.
6. A method for configuring information, applicable to an IAB-node, the method including:
   receiving uplink traffic to routing ID mapping configuration information, the configuration information including a second type indicator, the second type indicator being used to indicate whether an entry or a BAP routing ID in the entry belongs to a topology of a non-F1-terminating donor.
7. The method according to Supplement 6, wherein,
   the second type indicator is indicated or configured by a non-F1-terminating topology indicator IE in F1 application protocol (F1AP) signaling.
8. The method according to Supplement 6, wherein,
   the second type indicator is a Boolean variable.
9. The method according to Supplement 8, wherein,
   if the entry is configured with a non-F1-terminating topology indicator in the F1AP signaling, the second type indicator is of a first value; and
   if the entry is not configured with a non-F1-terminating topology indicator in the F1AP signaling, the second type indicator is of a second value.
10. The method according to Supplement 6, wherein,
   the second type indicator is an enumerated variable and is used to indicate a topology type.
11. The method according to Supplement 10, wherein,
   if the entry is configured with a non-F1-terminating topology indicator in the F1AP signaling, the second type indicator is of a value to which a non-F1-terminating topology corresponds.
12. The method according to Supplement 10, wherein,
   if the entry is not configured with a non-F1-terminating topology indicator in the F1AP signaling, the second type indicator is of a value to which an F1-terminating topology corresponds.
13. The method according to Supplement 6, wherein,
   when a BAP service data unit (SDU) is received from an upper layer by the IAB-node and needs to be transmitted to an uplink direction, a BAP entity, according to an uplink traffic and a routing ID mapping relationship, determines a topology to which data need to be transmitted.
14. The method according to Supplement 13, wherein,
   when the BAP service data unit (SDU) is received from the upper layer by the IAB-node and needs to be transmitted to the uplink direction, after the BAP entity selects an entry in an uplink traffic to routing ID mapping configuration according to a traffic type specifier to which the BAP SDU corresponds, the BAP entity determines a topology of a BAP data PDU to which the BAP SDU corresponds according to the second type indicator in the entry.
15. The method according to Supplement 14, wherein,
   if the second type indicator to which the selected entry corresponds indicates a non-F1-terminating topology, the BAP data PDU to which the BAP SDU corresponds is data belonging to a non-F1-terminating donor topology; or
   if the second type indicator to which the selected entry corresponds indicates an F1-terminating topology, the BAP data PDU to which the BAP SDU corresponds is data belonging to an F1-terminating donor topology.
16. A method for configuring information, applicable to an IAB-node, the method including:
   the IAB-node performs BH RLC channel mapping for BAP data packets from collocated BAP entities, or performs BH RLC channel mapping for a BAP SDU from an upper layer, according to topology information on a link to which a BH RLC channel belongs.
17. The method according to Supplement 16, wherein,
   for a BAP data PDU received from an ingress BH RLC channel on an ingress link, after an egress link is selected, if there is an entry in BH RLC channel mapping configuration, an ingress BH RLC channel identity of the entry matches the ingress BH RLC channel of the BAP data PDU, an ingress link identity of the entry matches the ingress link of the BAP data PDU, a topology to which the ingress link identity of the entry belongs is identical to a topology to which the ingress link of the BAP data PDU belongs, the egress link identity of the entry corresponds to the selected egress link and a topology to which the egress link identity of the entry belongs is identical to a topology to which the selected egress link belongs, an egress BH RLC to which an egress BH RLC channel identity in the selected entry corresponds is selected.
18. The method according to Supplement 16, wherein,
   in a case where the IAB-node receives a BAP SDU from the upper layer and transmits it to the uplink direction, after the BAP entity selects the egress link according to a BAP sublayer routing method,
   for a BAP SDU encapsulated with F1-U data packets, if there is an entry in an uplink traffic to BH RLC channel mapping configuration, the traffic type specifier of the entry corresponds to a destination IP address and a TEID (tunnel endpoint identifier) of the BAP SDU, the egress link identity of the entry corresponds to the selected egress link and the topology to which the egress link identity of the entry belongs is identical to the topology to which the selected egress link belongs, the egress BH RLC channel to which the egress BH RLC channel identity in the selected entry corresponds is selected.
19. The method according to Supplement 16, wherein,
   in a case where the IAB-node receives a BAP SDU from the upper layer and transmits it to the uplink direction, after the BAP entity selects the egress link according to a BAP sublayer routing method,
   for a BAP SDU encapsulated with non-F1-U data packets, if there is an entry in the uplink traffic to BH RLC channel mapping configuration, the traffic type specifier of the entry corresponds to a traffic type of the BAP SDU, the egress link identity of the entry corresponds to the selected egress link and the topology to which the egress link identity of the entry belongs is identical to the topology to which the selected egress link belongs, the egress BH RLC channel to which the egress BH RLC channel identity in the selected entry corresponds is selected.

## Claims

1. An apparatus for configuring information, applicable to an IAB-node, the apparatus comprising a first processing unit, the first processing unit being configured to:
match a topology in backhaul routing configuration indicated by a first type indicator with a topology to which a BAP data protocol data unit (PDU) belongs.

2. The apparatus according to claim 1, wherein,
when a BAP entity needs to transmit the BAP data PDU, if a BAP address of an entry in the backhaul routing configuration matches a destination field, a path identity of the BAP address of the entry is identical to a path field of the BAP address, a topology, obtained by the first type indicator, of the BAP address of the entry is identical to a topology of the BAP data PDU and an egress link to which a next-hop BAP address of the BAP address of the entry corresponds is available, the egress link to which the next-hop BAP address corresponds is selected.

3. The apparatus according to claim 1 or 2, wherein,
if no BAP address of an entry matching a destination field, a path field and a topology exists in the backhaul routing configuration, or an egress link to which a matching entry corresponds is unavailable,
if there exists at least one entry in the backhaul routing configuration whose BAP address matches the destination field, the topology, obtained by the first type indicator, of the entry is identical to the topology of the BAP data PDU and an egress link to which the next-hop BAP address corresponds is available, an entry is selected from the at least one entry, and the egress link to which the next-hop BAP address of the entry corresponds is selected.

4. The apparatus according to claim 1, wherein,
in the backhaul routing configuration, for identical first type indicators, each combination of BAP address and BAP path indicator corresponds to at most one entry.

5. The apparatus according to claim 1, wherein,
in the backhaul routing configuration, for identical first type indicators, each BAP address corresponds to at least one entry.

6. An apparatus for configuring information, applicable to an IAB-node, the apparatus comprising a second processing unit, the second processing unit being configured to:
receive uplink traffic to routing ID mapping configuration information, the configuration information including a second type indicator, the second type indicator being used to indicate whether an entry or a BAP routing ID in the entry belongs to a topology of a non-F1-terminating donor.

7. The apparatus according to claim 6, wherein,
the second type indicator is indicated or configured by a non-F1-terminating topology indicator IE in F1 application protocol (F1AP) signaling.

8. The apparatus according to claim 6, wherein,
the second type indicator is a Boolean variable.

9. The apparatus according to claim 8, wherein,
if the entry is configured with a non-F1-terminating topology indicator in the F1AP signaling, the second type indicator is of a first value;
and if the entry is not configured with a non-F 1-terminating topology indicator in the F1AP signaling, the second type indicator is of a second value.

10. The apparatus according to claim 6, wherein,
the second type indicator is an enumerated variable and is used to indicate a topology type.

11. The apparatus according to claim 10, wherein,
if the entry is configured with a non-F1-terminating topology indicator in the F1AP signaling, the second type indicator is of a value to which a non-F1-terminating topology corresponds.

12. The apparatus according to claim 10, wherein,
if the entry is not configured with a non-F1-terminating topology indicator in the F1AP signaling, the second type indicator is of a value to which an F1-terminating topology corresponds.

13. The apparatus according to claim 6, wherein,
when a BAP service data unit (SDU) is received from an upper layer by the IAB-node and needs to be transmitted to an uplink direction, a BAP entity, according to the uplink traffic to routing ID mapping configuration, determines a topology to which data need to be transmitted.

14. The apparatus according to claim 13, wherein,
when the BAP service data unit (SDU) is received from the upper layer by the IAB-node and needs to be transmitted to the uplink direction, after the BAP entity selects an entry from the uplink traffic to routing ID mapping configuration according to a traffic type specifier to which the BAP SDU corresponds, the BAP entity determines a topology of a BAP data PDU to which the BAP SDU corresponds according to the second type indicator in the entry.

15. The apparatus according to claim 14, wherein,
if the second type indicator to which the selected entry corresponds indicates a non-F1-terminating topology, the BAP data PDU to which the BAP SDU corresponds is data belonging to a non-F1-terminating donor topology; or
if the second type indicator to which the selected entry corresponds indicates an F1-terminating topology, the BAP data PDU to which the BAP SDU corresponds is data belonging to an F1-terminating donor topology.

16. An apparatus for configuring information, applicable to an IAB-node, the apparatus comprising a third processing unit, the third processing unit being configured to:
perform BH RLC channel mapping for BAP data packets from collocated BAP entities, or perform BH RLC channel mapping for a BAP SDU from an upper layer, according to topology information on a link to which a BH RLC channel belongs.

17. The apparatus according to claim 16, wherein,
for a BAP data PDU received from an ingress BH RLC channel on an ingress link, after the egress link is selected, if there is an entry in the BH RLC channel mapping configuration, an ingress BH RLC channel identity of the entry matches the ingress BH RLC channel of the BAP data PDU, an ingress link identity of the entry matches the ingress link of the BAP data PDU, a topology to which the ingress link identity of the entry belongs is identical to a topology to which the ingress link of the BAP data PDU belongs, the egress link identity of the entry corresponds to the selected egress link and a topology to which the egress link identity of the entry belongs is identical to a topology to which the selected egress link belongs, an egress BH RLC to which an egress BH RLC channel identity in the entry corresponds is selected.

18. The apparatus according to claim 16, wherein,
in a case where the IAB-node receives a BAP SDU from the upper layer and transmits it to the uplink direction, after the BAP entity selects the egress link according to a BAP sublayer routing apparatus,
for a BAP SDU encapsulated with F1-U data packets, if there is an entry in an uplink traffic to BH RLC channel mapping configuration, the traffic type specifier of the entry corresponds to a destination IP address and a TEID (tunnel endpoint identifier) of the BAP SDU, the egress link identity of the entry corresponds to the selected egress link and the topology to which the egress link identity of the entry belongs is identical to the topology to which the selected egress link belongs, the egress BH RLC channel to which the egress BH RLC channel identity in the entry corresponds is selected.

19. The apparatus according to claim 16, wherein,
in a case where the IAB-node receives a BAP SDU from the upper layer and transmits it to the uplink direction, after the BAP entity selects the egress link according to a BAP sublayer routing apparatus,
for a BAP SDU encapsulated with non-F1-U data packets, if there is an entry in the uplink traffic to BH RLC channel mapping configuration, the traffic type specifier of the entry corresponds to a traffic type of the BAP SDU, the egress link identity of the entry corresponds to the selected egress link and the topology to which the egress link identity of the entry belongs is identical to the topology to which the selected egress link belongs, the egress BH RLC channel to which the egress BH RLC channel identity in the entry corresponds is selected.
